(19) **Europäisches Patentamt / European Patent Office / Office européen des brevets**

(11) **EP 2 976 818 B1**

(12) # EUROPÄISCHE PATENTSCHRIFT

(45) Veröffentlichungstag und Bekanntmachung des Hinweises auf die Patenterteilung:
**08.05.2019   Patentblatt 2019/19**

(21) Anmeldenummer: **14715448.8**

(22) Anmeldetag: **21.03.2014**

(51) Int Cl.:
*G01N 27/22* *(2006.01)*     *H02G 1/12* *(2006.01)*
*H01H 1/00* *(2006.01)*

(86) Internationale Anmeldenummer:
**PCT/IB2014/060038**

(87) Internationale Veröffentlichungsnummer:
**WO 2014/147596 (25.09.2014 Gazette 2014/39)**

(54) **EINRICHTUNG ZUR ERKENNUNG DER BERÜHRUNG EINES ELEKTRISCHEN LEITERS DURCH EIN WERKZEUG**

DEVICE FOR DETECTING THE CONTACT BETWEEN AN ELECTRICAL CONDUCTOR AND A TOOL

DISPOSITIF DE DÉTECTION DU CONTACT ENTRE UN CONDUCTEUR ÉLECTRIQUE ET UN OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.03.2013   EP 13160497**

(43) Veröffentlichungstag der Anmeldung:
**27.01.2016   Patentblatt 2016/04**

(73) Patentinhaber: **Schleuniger Holding AG**
**3608 Thun (CH)**

(72) Erfinder:
• **Deschler, Raphael**
 **CH-3653 Oberhofen (CH)**
• **Jost, Michael**
 **CH-3600 Thun (CH)**
• **Kampmann, Roland**
 **58456 Witten (DE)**
• **Thiele, Martin**
 **42477 Radevormwald (DE)**

(74) Vertreter: **Patentbüro Paul Rosenich AG**
**BGZ**
**9497 Triesenberg (LI)**

(56) Entgegenhaltungen:
| | |
|---|---|
| EP-A1- 2 299 459 | DE-A1-102007 053 825 |
| DE-A1-102009 027 967 | DE-U1-202011 107 872 |
| JP-A- H11 299 036 | US-A- 5 272 941 |
| US-A1- 2007 121 796 | US-A1- 2008 100 146 |

EP 2 976 818 B1

**Beschreibung**

Die Erfindung betrifft eine Einrichtung zur Erkennung der Berührung eines gegebenenfalls von einer meist elektrischen Isolierung umhüllten elektrischen Leiters durch ein Werkzeug, das aus elektrisch leitfähigem Material besteht und an einem Werkzeughalter aus elektrisch leitfähigem Material befestigt ist, wobei zwischen Werkzeug und Werkzeughalter eine dünne elektrische Isolierung vorgesehen ist, entsprechend dem Oberbegriff von Anspruch 1, sowie eine Abisoliermaschine mit zumindest einem Abisoliermesser, das an einem Werkzeughalter gehalten ist, und mit einer Einrichtung zur Erkennung der Berührung eines elektrischen Leiters eines Kabels durch zumindest eines der Abisoliermesser, entsprechend dem Oberbegriff von Anspruch 15.

Beim Abisolieren von Kabeln werden oft zwei V-förmige Messer eingesetzt, welche die Kabelisolierung fast bis zum Leiter einschneiden. Nach dem Einschnitt werden die Messer einen kleinen Prozentsatz der Isolierungsdicke zurückgefahren. Danach wird das Kabel bei noch zugestellten Messern um den Abisolierweg zurückgezogen, oder die Messer führen den Abisolierweg aus, sodass die Messer das abgetrennte Isolierungsstück abstreifen. In der Kabelbearbeitung ist es von immer grösserer Bedeutung, Produktionsfehler automatisch erkennen zu können. Aufgrund der hohen Anforderung an die Sicherheit elektrischer Kabel für beispielsweise die Automobil- oder Luftfahrtindustrie werden zunehmend kleinste Leiterverletzungen wie Kratzer oder Einschnitte als Risiko betrachtet, da diese Verletzungen zusammen mit Vibrations- und/oder Korrosionseinfluss zum Bruch führen können. Daher wurden bereits einige Vorschläge zur Erkennung der Messer-Leiter-Berührung gemacht, wie im Folgenden kurz dargelegt wird.

In der DE 10 2009 027967 A1 ist eine Einrichtung zur Erkennung der Berührung eines gegebenenfalls von einer meist elektrischen Isolierung umhüllten elektrischen Leiters durch ein (Abisolier)Werkzeug offenbart, das eine mit dem Werkzeug verbundene Schaltungsanordnung und ein aus elektrisch leitfähigem Material bestehendes und gegen die Abisoliervorrichtung elektrisch isoliertes Werkzeug umfasst. Zur Bestimmung, ob das Messer den abzuisolierenden Leiter berührt, wird eine Spannung an Leiter oder Messer angelegt und lediglich festgestellt, ob ein Stromfluss erfolgt, was bei Berührung der Leiter durch das Messer durch Schliessen des gebildeten Stromkreises bewirkt wird. Solange kein Stromfluss erfolgt liegt dagegen keine gegenseitige Berührung der elektrisch leitenden Bauteile Messer und Leiter vor. Weitere Auswerteverfahren werden hingegen nicht vorgeschlagen.So ist in der JP2133016A die kapazitive Spannungseinkopplung auf das Kabel und die kapazitive Spannungsauskopplung aus dem Kabel mittels eines geerdeten Messers als Spannungsableiter offenbart. Das zu bearbeitende Kabel wird vor der Bearbeitung durch zwei als Elektroden funktionierende Rohrstücke geführt. Durch das erste Rohrstück wird kapazitiv eine hochfrequente Spannung ins Kabel eingekoppelt, im zweiten Rohrstück kapazitiv ausgekoppelt. Berührt das geerdete Messer den Leiter, ist das als Spannungseinbruch am zweiten Rohrstück erkennbar. Diese Methode funktioniert aber nur für relativ kurze Kabel, da lange Kabel für die kapazitive Einkopplung eine zu hohe kapazitive Last darstellen. Andererseits ist die kürzeste Kabellänge durch die Rohrlängen gegeben.

Die induktive Spannungseinkopplung aufs Kabel mit kapazitiver Auskopplung aus dem Kabel mit einem geerdeten Messer als Spannungsableiter ist Gegenstand des Patentes EP1772701B1. Das zu bearbeitende Kabel wird vor der Bearbeitung durch eine Torusspule und ein Rohrstück geführt. Über die Torusspule wird eine hochfrequente Spannung ins Kabel eingekoppelt und über das Rohrstück ausgekoppelt. Berührt das geerdete Messer den Leiter, ist das als Spannungseinbruch am zweiten Rohrstück erkennbar. Diese Methode hat den Nachteil, dass sie nur für relativ lange, kapazitiv gut geerdete Kabel funktioniert, und deshalb auch nur für die eine Seite der Abisolierung anwendbar ist.

In der DE102007053825.3 und der WO2012/015062A1 ist hingegen die ohmsche Spannungseinkopplung auf das isolierte Messer beschrieben. Das Abisoliermesser wird elektrisch isoliert befestigt und über einen Widerstand mit einer hochfrequenten Spannungsquelle verbunden. Berührt das Messer den Leiter, ist dies als Spannungseinbruch oder Spannungsformveränderung am Messer erkennbar. Bei kurzen Kabeln ist aber das Verhältnis der Messereigenkapazität zur Kabelkapazität ungünstig und wird darum eine Erkennung der Messer-Leiter-Berührung aufwändig.

Kombinationen der oben erläuterten drei Methoden zur Erkennung der Messer-Leiter-Berührung sind beispielsweise in der JP7-227022A und der JP2000354315A beschrieben. Weiterer Stand der Technik ist noch in DE 20 2011 107872 U1 und in JP H11 299036 A zu finden.

Die vorliegende Erfindung stellt sich deshalb die Aufgabe, eine Einrichtung zu schaffen, die sicher, robust und möglichst einfach anzeigt, wenn ein Werkzeug einen elektrischen Leiter berührt, der beispielsweise unterhalb einer vom Werkzeug durchdrungenen elektrischen Isolierung liegt. Insbesondere soll erkannt werden, wenn mindestens eines der Messer einer Kabel-Abisoliermaschine - oder auch deren Abzugswerkzeug - den Leiter - oder, im Falle eines Koaxialkabels, den Schirm - berührt. Diese Berührungserkennung soll auch für potentialfreie und kurze Kabellängen, typischerweise für Kabellängen kleiner als 80 mm, möglich sein, beim Einschneiden sowie beim Abziehen der Isolierung.

Die Aufgabe wird durch die Merkmale des unabhängigen Patentanspruchs 1 sowie des unabhängigen Patentanspruchs 15 gelöst. Weitere vorteilhafte Merkmale erfindungsgemässer Ausführungsformen sind in den abhängigen Ansprüchen enthalten.

Bei der Einrichtung zur Erkennung der Berührung eines von einer elektrischen Isolierung umhüllten elektrischen Leiters durch ein Werkzeug, die eine mit dem Werkzeug verbundene Schaltungsanordnung umfasst, ist erfindungsgemäss vorgesehen, dass zwischen Werkzeug und Werkzeughalter elektrisch eine Induktivität geschaltet und derart das Werkzeug und der Werkzeughalter Teile eines Parallel-Schwingkreis hoher Güte sind, und dass eine Schaltungsanordnung zur Ermittlung der Änderung charakteristischer Schwingungsparameter dieses Schwingkreises mit diesem verbunden ist. Typischerweise ist der elektrische Leiter Bestandteil eines Kabels, entweder als zentraler Leiter unter einer elektrisch isolierenden Ummantelung oder in Form des Schirmes eines Koaxialkabels. Als Werkzeug können Abisoliermesser oder Abziehwerkzeuge, aber auch Greifer od. dgl. vorgesehen sein. Im Gegensatz zu bekannten Methoden zur Erkennung der Messer-Leiter-Berührung bieten diese Merkmale gemäss der vorliegenden Erfindung den Vorteil, dass der zentrale Leiter des abzuisolierenden Kabels nicht elektrisch kontaktiert werden muss und darüber hinaus die Signalveränderung zur Erkennung der Werkzeug(insbesondere Messer)-Leiter-Berührung kaum von der Leiterlänge beeinflusst wird, sodass eine Qualitätskontrolle auch bei sehr kurzen potentialfreien Kabeln mit kleinem Elektronikaufwand möglich ist.

Diese Vorgangsweise unterscheidet sich deutlich von allen Methoden, die sich auf die Feststellung des Schliessens eines Stromkreises beschränken, wie beispielsweise die DE 10 2009 027967 A1, Derartige einfache Vorrichtungen gemäss dem Stand der Technik bauen keinerlei Schwingkreise unter Einbeziehung von Elementen der Abisoliervorrichtung auf und sehen daher auch keinerlei Ermittlung von Änderungen charakteristischer Schwingungsparameter vor. Allfällige vorhandene Kondensatoranordnungen bleiben bei diesen bekannten Vorrichtungen ungenutzt. Das Anlegen einer Spannung, um gegebenenfalls einen Stromfluss feststellen zu können ist ein komplett verschiedenes Prinzip als der erfindungsgemässe Aufbau und das aktive Betreiben eines Parallelschwingkreises und die Überwachung von dessen charakteristischen Schwingungsparametern.

Bevorzugt ist die Kapazität des Parallel-Schwingkreises funktionell durch die Kapazität der Anordnung Werkzeug, Isolierung und Werkzeughalter gebildet. Das Werkzeug als auch der Werkzeughalter bestehen typischerweise aus elektrisch leitfähigem Material und beide sind durch eine dünne elektrische Isolierung galvanisch voneinander getrennt.

Die Kapazität des Parallel-Schwingkreises ist teilweise auch durch die Kapazität der Verbindung von Werkzeug und Schaltungsanordnung, insbesondere durch die Kapazität eines Koaxialkabels, gebildet.

Wenn die gemäss den obigen Anordnungen den Schwingkreis bestimmende Kapazität aus konstruktiven Gründen zu klein sein sollte, um einen stabilen LC-Schwingkreis zu bilden, kann vorteilhafterweise die den Schwingkreis bildende Kapazität durch einen Ausgangs-Kondensator vergrössert werden. Dies kann etwa beim Einsatz einer dickeren Isolation zwischen Werkzeug und Werkzeughalter oder bei Verwendung eines kürzeren Koaxialkabels vorteilhaft sein.

In einfacher und bewährter Weise kann als Induktivität zumindest eine Spule vorgesehen sein. Selbstverständlich können im Rahmen der Erfindung gegebenenfalls auch andere induktive Bauteile eingesetzt werden.

Bevorzugt weist die Schaltungsanordnung einen Frequenzgenerator für eine Erregerspannung für den Schwingkreis und einen Phasendetektor zur Auswertung der Phasenverschiebung zwischen der Erregerspannung und der Schwingkreisspannung auf, die zur Erkennung der Berührung zwischen Werkzeug und Leiter herangezogen wird. Damit ist eine relativ einfache und funktionssichere Schaltung realisierbar, deren Funktionalität auch bei Parallelschaltung mehrerer Kapazitäten und/oder Induktivitäten gewährleistet ist.

Eine weitere vorteilhafte Ausführungsform der Erfindung ist dadurch gekennzeichnet, dass die Schaltungsanordnung eine Einrichtung zur Auswertung des Frequenzganges des Schwingkreises aufweist. Auch damit ist eine robuste Detektion eines Kontakts zwischen dem Werkzeug und dem Leiter möglich.

Eine weitere Ausführungsform der Erfindung ist dadurch gekennzeichnet, dass die Schaltungsanordnung eine Einrichtung zur Auswertung der Verschiebung der Resonanzfrequenz des Schwingkreises aufweist. Damit ist eine sehr robuste Methode zur Ermittlung der Berührung des elektrischen Leiters durch das Werkzeug möglich.

Alternativ zu den oben genannten Ausführungsformen könnte erfindungsgemäss die Schaltungsanordnung eine Einrichtung zur Auswertung der Änderung der Spannungs-Amplitude des Schwingkreises aufweisen.

Einrichtung zur Gewichtung für die Werkzeug-Leiter-Berührungen bei der Kabelbearbeitung je nach Berührungsdauer und Zeitpunkt innerhalb des Kabelbearbeitungsprozesses vorgesehen ist, durch welche Einrichtung quantitative Produktionsausschusskriterien bestimmbar sind.

Vorzugsweise liegt das Werkzeug nur an wenigen, eng begrenzten Stellen am Werkzeughalter an und sind zwischen diesen Stellen Freistellungen vorgesehen. Durch diese Freistellungen kann die Kapazität Werkzeug-Werkzeughalter verkleinert und damit das Kapazitäts-Verhältnis von Leiter-Erde zu Werkzeug-Werkzeughalter vergrössert werden. Damit wird die Sensibilität des Systems erhöht.

Gemäss einer weiteren erfindungsgemässen Ausführungsform ist die elektrische Isolierung zwischen Werkzeug und Werkzeughalter durch eine elektrisch isolierende Beschichtung von Werkzeug und/oder Werkzeughalter gebildet, vorzugsweise durch eine keramische Beschichtung. Typischerweise sind Werkzeug und Werkzeughalter, beispielsweise die Messer und die Werkzeughalter von Abisoliermaschinen, aus einem elektrisch gut leitenden Material gefertigt. Die elektrische Isolierung von Messer zu Werkzeughalter kann dann beispielsweise für Werkzeughalter aus Aluminium durch eine ALTEF®-Beschichtung erfolgen.

Auch könnte vorteilhafterweise zwischen Werkzeug und Werkzeughalter zumindest eine isolierende Zwischenscheibe angeordnet sein, vorzugsweise zumindest eine auf dem Werkzeug oder dem Werkzeughalter befestigte, vorzugsweise aufgeklebte, Keramikplatte. Damit sind Streuungen der Kapazität weitestgehend unterbunden, wie sie beispielsweise durch unterschiedliche Beschichtungsdicken verursacht werden können. Ein besonderer Vorteil liegt darin, dass die Schichtung Werkzeug-Keramik-Werkzeughalter im Gegensatz zu einer Baugruppe mit einer wesentlich dünneren Beschichtung eine kleinere Kapazität besitzt. Damit kann die Sensibilität des Systems erhöht werden und es können auch Berührungen des Werkzeugs an sehr dünnen Leiterquerschnitten erkannt werden.

Eine zusätzliche Ausführungsform der Erfindung sieht vor, dass ein Encoder für die Abstandsmessung der Werkzeuge vorgesehen ist und die Schaltungsanordnung zur Berechnung des Durchmessers des Leiters aus dem Abstand der Werkzeuge bei festgestellter Änderung des Schwingungsparameters des Schwingkreises ausgelegt ist.

Vorzugsweise ist eine erfindungsgemässe Einrichtung wie bisher beschrieben dadurch gekennzeichnet, dass das Werkzeug ein Abisoliermesser an einer Abisoliermaschine für Kabel ist.

Zur Lösung der eingangs gestellten Aufgabe für eine Abisoliermaschine, die mit zumindest einem Abisoliermesser, das an einem Werkzeughalter gehalten ist, und mit einer Einrichtung zur Erkennung der Berührung eines elektrischen Leiters eines Kabels durch zumindest eines der Abisoliermesser, ist erfindungsgemäss vorgesehen, dass das Abisoliermesser das Werkzeug am Werkzeughalter einer Einrichtung gemäss einem der vorhergehenden Absätze ist.

Die Erfindung wird anhand eines Ausführungsbeispiels, welches in den Zeichnungen dargestellt ist, näher erläutert. Es zeigt:

Fig. 1: Funktionsprinzip der Messer-Leiter-Berührungserkennung

Fig. 2: Funktionsprinzip als vereinfachtes Elektroschema

Fig. 3: Phasendetektor

Fig. 4: Elektrisches Ersatzschaltbild und Frequenzgang des Schwingkreises

Fig. 5: Bode-Diagramm

Fig. 6: Oszillatorschaltung

Fig. 7: Messer auf Werkzeughalter, 3D-Ansicht

Fig. 8: Werkzeughalter, 3D-Ansicht

Fig. 9: Ansicht und Schnitt des Messers auf dem Werkzeughalter

Fig. 10: Ansicht und Schnitt des Messers auf dem Werkzeughalter mit Isolierung

Fig. 11: Bestimmung des Leiterdurchmessers

Fig. 12: Ausführungsbeispiel einer Messerkontaktierung mit Kontaktkolben in zwei Ansichten

Fig. 13: Ausführungsbeispiel einer Messerkontaktierung mit Kabelschuh

Fig. 14: Messerbalken mit fünf separat betriebenen Messern

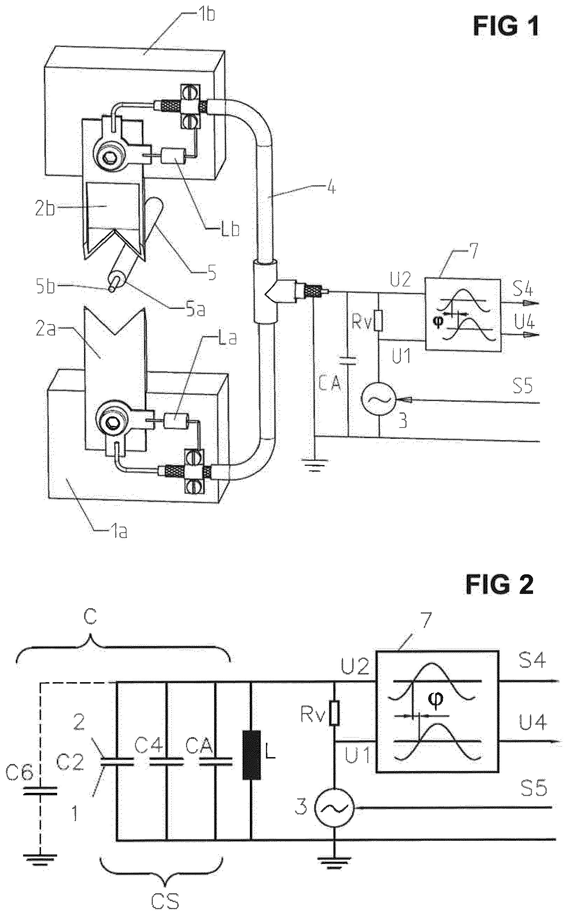

Fig. 1 zeigt das Funktionsprinzip der Erfindung am Beispiel einer Messer-Leiter-Berührungs-Erkennung für Abisoliermaschinen für Kabel. Das Werkzeug in Form des Messers 2a und dessen Werkzeughalter 1a sowie das Messer 2b und der Werkzeughalter 1b sind elektrisch voneinander durch eine dünne Schicht (nicht dargestellt) getrennt, und bilden so zusammen zwei Plattenkondensatoren. Im gegenständlichen Beispiel ist als Werkzeughalter 1a, 1b ein Messerbalken vorgesehen. Anstelle von Messern können als Werkzeuge auch Greifer oder ähnliche Vorrichtungen vorgesehen sein. Die elektrische Isolierung kann z. B. mit einer Eloxidschicht eines aus Aluminium gefertigten Werkzeughalters 1a, 1b erreicht werden. Parallel zu diesen Kondensatoren wird, vorzugsweise in ihrer unmittelbaren Nähe, je eine Induktivität La und Lb angebracht, sodass ein Parallelschwingkreis hoher Güte, vorzugsweise mit Güte grösser 5, entsteht. Dieser wird durch den Oszillator 3, vorzugsweise Bestandteil einer Schaltungsanordnung, über den Widerstand Rv und das Koaxialkabel 4 in seiner Resonanzfrequenz angeregt. Die Oszillatorspannung ist vorzugsweise sinusförmig.

Berührt eines der Messer 2a oder 2b beim Einschneiden oder Abziehen der Isolierung 5a des Kabels 5 dessen elektrischen Leiter 5b, wird der Schwingkreis durch die Kapazitätszunahme verstimmt. Auch bei Berührung eines elektrischen Leiters durch ein anderes Werkzeug gilt das Gleiche. Die dadurch entstehende Phasenverschiebung φ zwischen Erregerspannung U1 und Schwingkreisspannung U2 wird mit einem Phasendetektor 7, ebenfalls vorzugsweise Teil der Schaltungsanordnung, in eine analoge Spannung U4 umgeformt und von einem Kontroller eingelesen. Das Signal S4 ist logisch 1, wenn die Spannung U1 gegenüber der Spannung U2 voreilend ist. Der Kontroller steuert den Oszillator 3 mit Signal S5 so, dass der Schwingkreis bei offener Messerstellung gegenüber dem Oszillator 3 leicht voreilend, also fast in Eigenresonanz schwingt.

Fig. 2 zeigt das Funktionsprinzip der Fig. 1 mit Ersatz der dort dargestellten Bauteile als vereinfachtes Elektroschema. L ist die Gesamtinduktivität, gebildet aus La und Lb. Der zweite Pol des Kondensators C2 wird aus den Messern 2a, 2b und der ersten Pol aus den Werkzeughaltern 1a und 1b gebildet. Kondensator C4 repräsentiert die Leiterkapazität des Koaxialkabels 4 und CA ein Ausgangskondensator der Elektronik. Mit dem Kapazitätswert von CA kann die Resonanzfrequenz justiert werden. Der Kondensator C6 repräsentiert die Kapazität des Leiters 5b gegen Erde. Bei einer Messer-Leiter-Berührung wird Kapazität C6 parallel zur Kapazität CS geschaltet. Damit vergrössert sich die Gesamtinduktivität C und verstimmt den LC-Schwingkreis. Die Funktionalität ist auch gewährleistet, wenn mehrere Messer-Werkzeughalter-Kapazitäten und mehrere Induktivitäten parallel geschaltet werden. Die Anzahl der Induktivitäten muss nicht mit jener der Messer übereinstimmen. Die Gesamtinduktivität kann auch örtlich in die Nähe des Vorwiderstandes Rv und des Oszillators 3 verschoben werden.

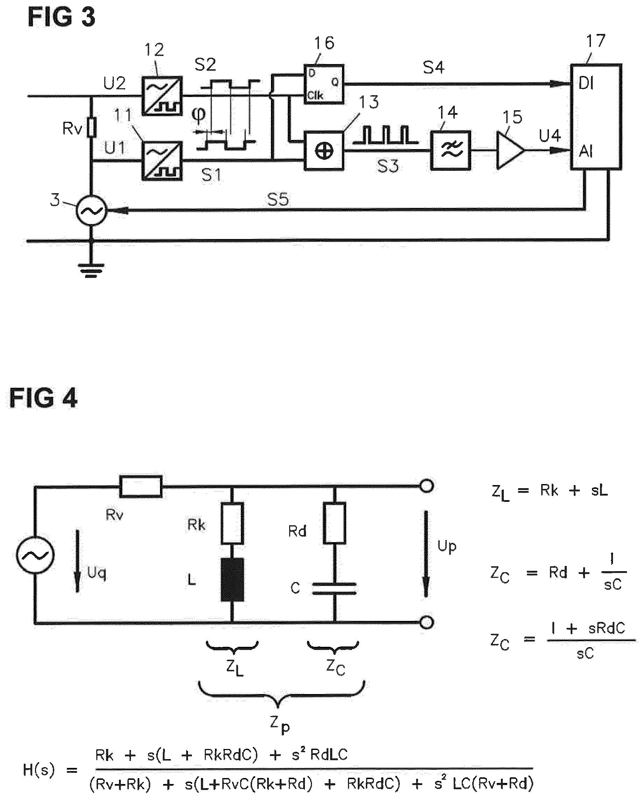

Fig. 3 zeigt ein Ausführungsbeispiel eines Phasendetektors 7. Die Sinusspannungen U1 und U2 werden durch die Komparatoren 11 und 12 in die Rechtecksignale S1 und S2 umgeformt, die durch ein XOR-Bauteil 13 miteinander verknüpft werden. Dabei entsteht das Rechtecksignal S3, dessen Einschalt-Perioden-Verhältnis proportional zur Phasenverschiebung φ zwischen U1 und U2 ist. Über den Tiefpass 14 wird das Signal gefiltert, durch den Verstärker 15 verstärkt und schliesslich vom Kontroller 17 eingelesen. Das D-Flip-Flop 16 generiert das Signal S4. Es ist logisch 1, wenn S1 gegenüber S2 voreilend ist, andernfalls ist S4 logisch 0. Anhand von S4, der Amplitude von U2 und eventuell U4 steuert der Kontroller 17, der auch Teil der Schaltungsanordnung sein kann, den Oszillator 3 so an, dass der LC-Schwingkreis ohne Leiterkontakt gegenüber dem Oszillator 3 leicht voreilend, also fast in Eigenresonanz schwingt und somit empfindlich auf eine Kapazitätserhöhung durch einen allfälligen Leiterkontakt reagieren kann. Wird der Schwingkreis durch einen Leiterkontakt verstimmt, verändert sich die Phasenverschiebung φ sprungartig, der Schwingkreis ist gegenüber Oszillator 3 nacheilend und damit der D-Flip-Flop-Ausgang S4 logisch 1, und das bearbeitete Kabel 5 kann als Ausschuss aussortiert werden.

Fig. 4 zeigt ein differenzierteres Ersatzschema und den daraus hergeleiteten Frequenzgang des Schwingkreises zur theoretischen Analyse des Systems. Der Kondensator und die Induktivität wurden mit ihren äquivalenten Serienwiderständen erweitert.

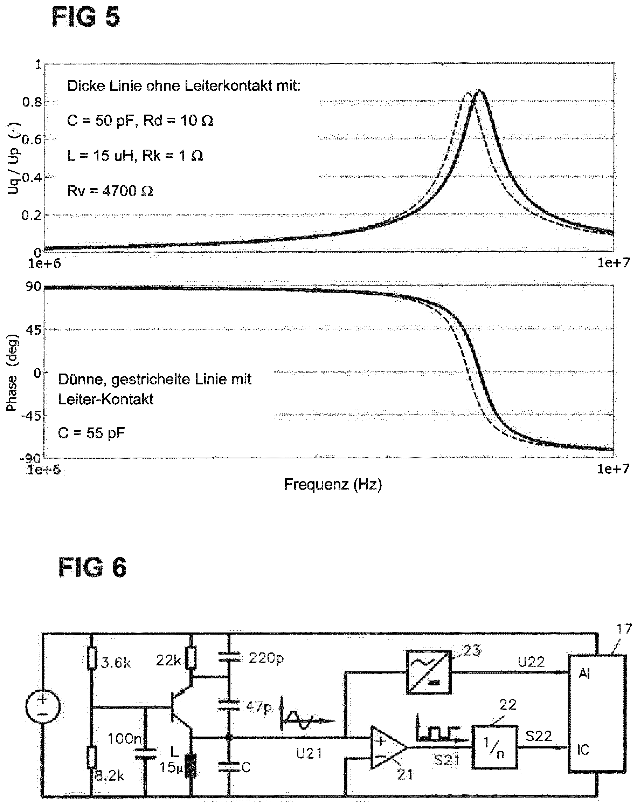

Fig. 5 zeigt das Bode-Diagramm, das den Frequenzgang der Schaltung der Fig. 4 darstellt. Für das Bode-Diagramm wurden realistische Werte eingesetzt. Die dicke Linie stellt dabei das Frequenzverhalten ohne Messer-Leiter-Kontakt dar. Die dünne, gestrichelte Linie zeigt das Frequenzverhalten mit Messer-Leiter-Kontakt. Dieser Kontakt wurde mit einer Erhöhung der Gesamtkapazität C von 50 auf 55 pF simuliert, da ein kleines Kabelstück, welches das Messer berührt, dieses mit etwa 5 pF kapazitiv belastet.

Fig. 6 zeigt eine Variante einer Oszillatorschaltung. Im Gegensatz zu dem in den Fig. 1 bis Fig. 5 beschriebenen Messprinzip, bei dem die Frequenz fixiert und die Phasenverschiebung φ gemessen wird, stellt sich bei der hier gezeigten Oszillatorschaltung immer die Eigenresonanz ein. Die Kapazität C repräsentiert die Gesamtkapazität und bildet zusammen mit L den Schwingkreis. Die Frequenz und die Amplitude der sinusförmigen Spannung U21 des Schwingkreises sinken, wenn ein Leiter 5b ein Werkzeug 2a, 2b, beispielsweise ein Messer, berührt. Daraus ergeben sich zwei weitere Methoden, eine Leiterberührung zu erkennen: Die Resonanzfrequenzmessung und die Amplitudenmessung.

Für die Resonanzfrequenzmessung wird U21 mit einem Komparator 21 in ein Rechtecksignal S21 umgeformt. Mit einem Frequenzteiler 22 wird die Frequenz von S21 reduziert. Es resultiert das Rechtecksignal S22, dessen Frequenz von einem Kontroller 17 gemessen wird. Berührt eines der Messer 2a, 2b den Leiter 5b, nimmt die Frequenz von S22 sprungartig ab. Obwohl die Frequenzabnahme durch eine Leiter-Messer-Berührung nur wenige Prozent ausmacht, ist die Methode der Resonanzfrequenzmessung recht robust, da sich die gemittelte Frequenz ohne äussere Schwingkreisbeeinflussung stabil verhält. Frequenz-Drifte durch Temperaturänderungen können mit Referenzmessungen bei geöffneter Messerstellung berücksichtigt werden.

Für die Amplitudenmessung wird U21 mit dem Gleichrichter 23 gleichgerichtet. Es resultiert ein analoges Spannungssignal U22, welches vom Kontroller 17 ausgewertet werden kann. Die Gleichrichtung kann zum Beispiel mit einem analogen Multiplizierer gemacht werden, indem U21 mit sich selbst multipliziert und danach mit einem Tiefpass gefiltert wird. Als Gleichrichter könnte aber auch ein einfacher Spitzenwertgleichrichter, die Greinacher- oder die Delon-Schaltung zum Einsatz kommen. Amplituden-Drifte durch Temperaturänderungen können mit Referenzmessungen bei geöffneter Messerstellung berücksichtigt werden.

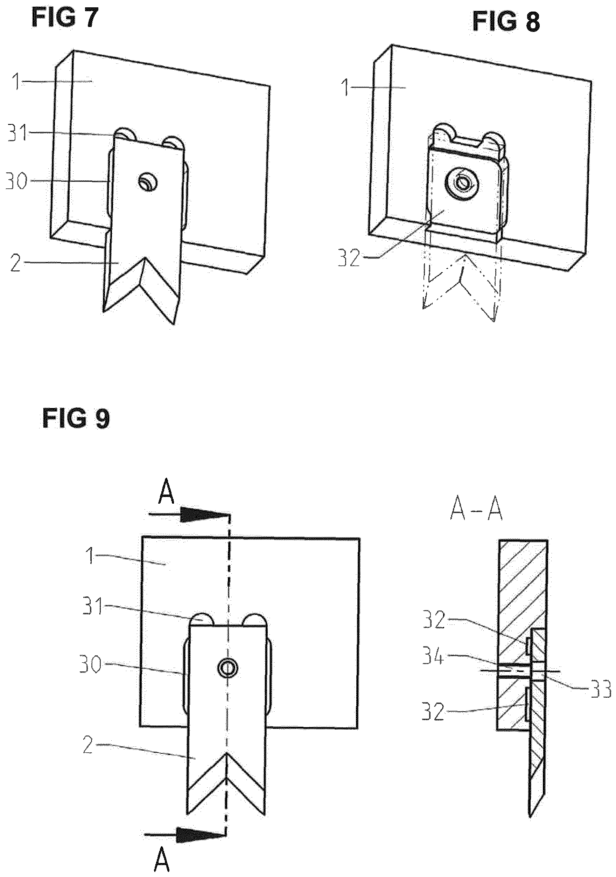

Fig. 7, Fig. 8 und Fig. 9 zeigen eine Variante der Messerhalterung im Werkzeughalter 1. Durch die Bohrung 33 im Messer 2 und Gewinde 34 im Werkzeughalter 1 wird das Messer mit einer Schraube auf dem Werkzeughalter formschlüssig fixiert. Seitlich und auf der Grundfläche liegt das Messer nur dort auf, wo es nötig ist, um die Schneid-, Abisolier- und Befestigungskräfte zu übertragen. Mit den Freistellungen 30, 31 und 32 im Werkzeughalter kann die Kapazität Messer-Werkzeughalter verkleinert werden. Dadurch wird das Kapazitäts-Verhältnis Leiter-Erde zu Messer-Werkzeughalter vergrössert und die Sensibilität des Systems erhöht.

Die Messer 2a, 2b und die Werkzeughalter 1a, 1b sind aus einem elektrisch gut leitenden Material gefertigt. Die elektrische Isolierung von Messer 2a, 2b zu Werkzeughalter 1a, 1b wird erreicht, indem der Werkzeughalter z. B. aus Aluminium gefertigt und mit einer ALTEF®-Schicht beschichtet wird. Die sehr harte ALTEF®-Schicht ist besonders abriebfest, korrosionsbeständig, antihaftend und weist einen niedrigen Reibungskoeffizienten auf. Die Oberfläche des Grundmaterials wird dabei in eine keramische Schicht umgewandelt, in die Teflon® eingelagert wird. Die Hälfte der Schichtdicke wächst in das Grundmaterial hinein. Natürlich können auch anders gestaltete Keramikplatten oder Keramikelemente zwischen den Messern 2a, 2b und dem jeweiligen Werkzeughalter 1a, 1b eingesetzt und mit diesen Bauteilen verbunden sein, was vorzugsweise durch Verkleben geschehen kann. Vorzugsweise wird beispielsweise eine 1,5mm dicke Keramik beidseitig auf dem Werkzeughalter und dem Werkzeug aufgeklebt und dann erst als Compound-Produkt fertig bearbeitet, wodurch genaue Passmasse erzielbar sind. Darüber hinaus ist eine derartige Keramikplatte auch sehr verschleissfest und unempfindlich beim Handling, beispielsweise bei Wechsel des Werkzeugs.

Die konkrete Ausgestaltung wird selbstverständlich die Fertigungsverfahren für keramikbeschichtete Bauteile berücksichtigen. Die komplette Isolierung besteht deshalb vorzugsweise aus mehreren fertigungsgerechten Bauteilen, sowie vorteilhafterweise auch die Werkzeughalter aus mehreren Einzelteilen bestehen werden. Die Isolierung zwischen Werkzeug und Werkzeughalter umfasst dabei auch alle Fügeflächen.

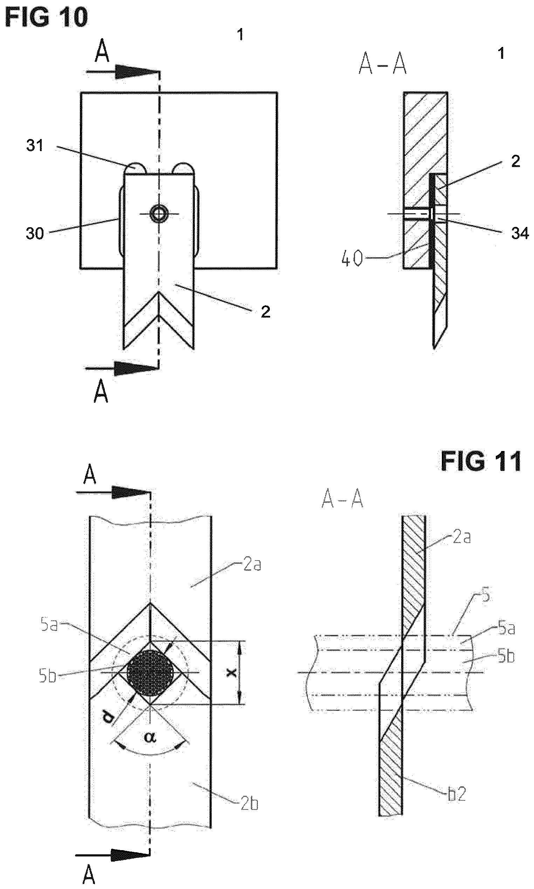

Fig. 10 zeigt eine weitere Variante der Messerhalterung, mit der die Messer-Werkzeughalter-Kapazität durch eine isolierende Zwischenscheibe 40 weiter verringert werden kann.

Je nach Kabel 5 und Bearbeitungsprozess kann es für die Messer-Leiter-Kontakt-Erkennung sinnvoll sein, wenn nebst oder anstatt eines festen Schwellwertes für die Phasenverschiebung φ ein Normband der Phasenverschiebung in Abhängigkeit von der Zeit oder vom Prozessfortschritt festgelegt wird. Fällt die Phasenverschiebung φ während des Bearbeitungszyklus ausserhalb dieses Normbandes, kann das Kabel 5 als Ausschuss aussortiert werden.

Durch die exakte Berührungserkennung zwischen Werkzeug 2a, 2b und Leiter 5b bietet sich die Möglichkeit, den Durchmesser d des Leiters 5b zu messen. Bislang war das beispielsweise mit Messern 2a, 2b nur durch den schwierig erfassbaren Kraftanstieg der Schneidkraft bei der Messer-Leiter-Berührung möglich.

Fig. 11 zeigt die geometrischen Verhältnisse der zwei V-förmigen Messer 2a, 2b beim Einschneidvorgang in die Isolierung 5a zum Zeitpunkt der Messer-Leiter-Berührung. Dabei wird ein idealer Schneidvorgang angenommen: Das Kabel 5 hat einen symmetrischen Aufbau und die Messerschneiden dringen symmetrisch in die Isolierung 5a ein, sodass vorzugsweise die erste Messer Leiter Berührung an allen vier Schneidekanten gleichzeitig stattfindet.

Zum Zeitpunkt der Messer-Leiter-Berührung misst ein Encoder die Messeröffnung x. Zusammen mit dem Öffnungswinkel α ist somit der Leiterdurchmesser d mit folgender Formel berechenbar:

$$d = x \cdot \sin\left(\frac{\alpha}{2}\right)$$

Bei Standard-Messern 2a, 2b mit einem Öffnungswinkel von 90° ist somit:

$$d = \frac{x}{\sqrt{2}}$$

Es ist zu erwähnen, dass die Bestimmung des Leiterdurchmessers auch für nicht-isolierte Leiter möglich ist und nicht nur auf v-förmige Messer beschränkt ist: Auch Guillotinenmesser o.ä. sind für die Bestimmung des Leiterdurchmessers denkbar.

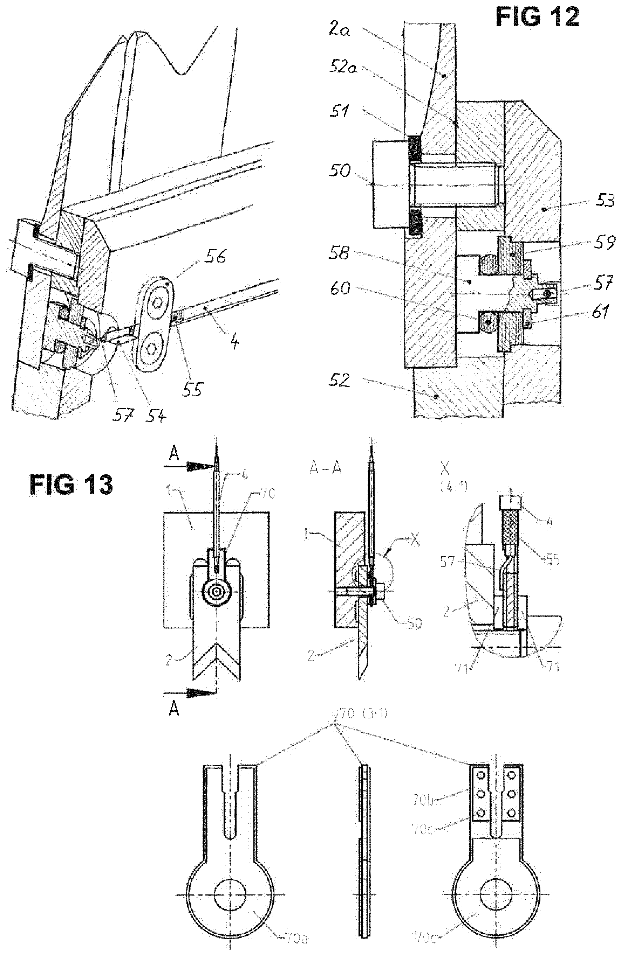

Fig. 12 zeigt ein Ausführungsbeispiel, wie das Messer 2a mit dem Innenleiter 57 eines Koaxialkabels 4 elektrisch verbunden wird. Das Messer 2a wird mit einer Schraube 50 über eine elektrisch isolierende Unterlagsscheibe 51 an der Messerkassette 52 befestigt. Die Messerkassette 52 ist auf der Kontaktfläche 52a zum Messer 2a elektrisch isolierend beschichtet. Die Messerkassette 52 ist elektrisch leitend auf den Messerbalken 53 geschraubt. Messerkassette 52 und Messerbalken 53 bilden im dargestellten Ausführungsbeispiel gemeinsam den Werkzeughalter 1. Im Messerbalken 53 befindet sich eine Nut 54, in die das Koaxialkabel 4 verlegt wird, dessen Schirm 55 mit einer Schirmklemmplatte 56 elektrisch mit dem Messerbalken 53 verbunden wird. Der Innenleiter 57 des Koaxialkabels 4 wird an den Kontaktkolben 58 gelötet. Der Kontaktkolben 58 wird mittels einer Isolierbüchse 59 montiert, die in den Messerbalken 53 eingepresst ist. Die Kontaktkraft vom Kontaktkolben 58 auf das Messer 2a ist durch die Vorspannung des O-Ringes 60 gegeben. Ein Sicherungsring 61 sorgt dafür, dass der Kontaktkolben 58 axial fixiert ist, sodass dieser auch bei entfernter Messerkassette 52 bzw. bei entfernten Messern 2a, 2b an Ort und Stelle bleibt.

Fig. 13 zeigt ein weiteres Ausführungsbeispiel, wie das Messer 2 mit dem Innenleiter 57 des Koaxialkabels 4 elektrisch verbunden wird. Messer 2 wird mit einer Schraube 50 über zwei elektrisch leitende Unterlagsscheiben 71 und ein Kabelschuh 70 auf den Messerhalter 1 geschraubt. Der Kabelschuh 70 ist aus einer doppelseitigen Printplatte gefertigt. Der Schirm 55 des Koaxialkabels 4 wird auf die Kupferflächen 70a und 70b gelötet, die miteinander über die Durchkontaktierungen 70c elektrisch verbunden sind. Der Innenleiter 57 des Koaxialkabels 4 wird an die Kupferfläche 70d gelötet.

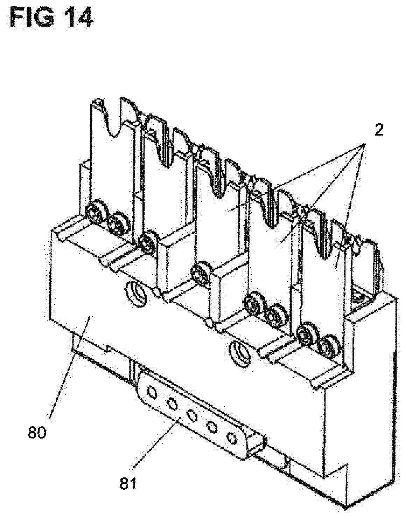

Fig. 14 zeigt eine Konstruktion eines Messerbalkens 80 mit konkret fünf nebeneinander liegenden Messern 2, die jeweils separat und paarweise gemäss dem oben beschriebenen erfindungsgemässen Prinzip ausgewertet werden können. Vorzugsweise sind jedoch zur einfacheren und rascheren Handhabung die Koaxialkabel (nicht dargestellt) für jeden Schwingkreis zu einem gemeinsam Stecker 81 geführt. Zwischen jedem der Messer 2 und dem Messerbalken 80 ist ein Kontaktierungsprint (nicht sichtbar) mit einer Spule L für den Schwingkreis eingesetzt. Die Kapazität C des Schwingkreises wird gemäss einer der oben bereits beschriebenen Varianten gebildet.

Abschliessend ist noch zu erwähnen, dass die erfindungsgemässe Einrichtung mit allen Arten von Messern für Abisoliermaschinen gleichermassen funktioniert, ob es nun zentrisch schliessende Messer sind, Guillotinenmesser, rotierende Messer, Irisblendenmesser, oder dergleichen.

*Bezugzeichenliste*

| | |
|---|---|
| 1a, 1b | Werkzeughalter |
| 2a, 2b | Werkzeug |
| 3 | Frequenzgenerator (Oszillator) |
| 4 | Koaxialkabel |
| 5 | Kabel |
| 5a | Isolierung des Leiters |
| 5b | Elektrischer Leiter |
| 7 | Phasendetektor |
| 11, 12 | Komparatoren |
| 13 | XOR-Bauteil |
| 14 | Tiefpass |
| 15 | Verstärker |
| 16 | D-Flip-Flop |
| 17 | Kontroller |
| 21 | Komparator |
| 22 | Frequenzteiler |
| 23 | Gleichrichter |
| 30, 31, 32 | Freistellungen |
| 33 | Bohrung |
| 34 | Gewinde |
| 40 | Zwischenscheibe |
| 50 | Schraube |
| 51 | Unterlagsscheibe |
| 52 | Messerkassette |
| 52a | Kontaktfläche |
| 53 | Messerbalken |
| 54 | Nut |
| 55 | Schirm des Koaxialkabels |
| 56 | Schirmklemmplatte |
| 57 | Innenleiter des Koaxialkabels |
| 58 | Kontaktkolben |
| 59 | Isolierbüchse |
| 60 | O-Ring |
| 61 | Sicherungsring |
| 70 | Kabelschuh |
| 70a, 70b, 70d | Kupferflächen |
| 70c | Durchkontaktierungen |
| 71 | Unterlagsscheiben |
| 80 | Messerbalken |
| 81 | Stecker |
| 82 | Kontaktierungsprint |
| C, C2, C4, C6 | Kapazitäten |
| CA | Ausgangs-Kondensator |
| L | Spule, Induktivität |
| La, Lb | Induktivitäten |

**Patentansprüche**

1. Einrichtung zur Erkennung der Berührung eines gegebenenfalls von einer meist elektrischen Isolierung (5a) umhüllten elektrischen Leiters (5b) durch ein Werkzeug (2a; 2b), das aus elektrisch leitfähigem Material besteht und an einem Werkzeughalter (1a; 1b) aus elektrisch leitfähigem Material befestigt ist, wobei zwischen Werkzeug und Werkzeughalter eine dünne elektrische Isolierung vorgesehen ist, **dadurch gekennzeichnet, dass** zwischen Werkzeug (2a; 2b) und Werkzeughalter (1a; 1b) elektrisch eine Induktivität (La; Lb) geschaltet und derart das Werkzeug (2a, 2b) und der Werkzeughalter (1a, 1b) Teile eines Parallel-Schwingkreises hoher Güte sind, und dass eine Schaltungsanordnung (3, 7) zur Ermittlung der Änderung charakteristischer Schwingungsparameter dieses Schwingkreises mit diesem verbunden ist, wobei eine Kapazität des Parallel-Schwingkreises teilweise durch eine Kapazität (C4) der Verbindung von Werkzeug und Schaltungsanordnung gebildet ist, wobei als Induktivität (La, Lb) zumindest eine Spule (L) vorgesehen ist.

2. Einrichtung nach Anspruch 1, **dadurch gekennzeichnet, dass** die Kapazität (CS) des Parallel-Schwingkreises funktionell durch die Kapazität (C2) der Anordnung Werkzeug (2a, 2b), Isolierung und Werkzeughalter (1a, 1b) gebildet ist.

3. Einrichtung nach Anspruch 1, **dadurch gekennzeichnet, dass** die Kapazität (CS) des Parallel-Schwingkreises durch die Kapazität (C4) der Verbindung von Werkzeug (2a, 2b) und Schaltungsanordnung (3, 7), insbesondere durch die Kapazität eines Koaxialkabels (4), gebildet ist.

4. Einrichtung nach Anspruch 1, **dadurch gekennzeichnet, dass** die Schwingkreis bildende Kapazität (CS) zumindest teilweise durch einen Ausgangs-Kondensator (CA) vergrössert ist.

5. Einrichtung nach Anspruch 1, **dadurch gekennzeichnet, dass** die Schaltungsanordnung einen Frequenzgenerator (3) für eine Erregerspannung für den Schwingkreis und einen Phasendetektor (7; 11 - 16) zur Auswertung der Phasenverschiebung φ zwischen der Erregerspannung und der Schwingkreisspannung aufweist.

6. Einrichtung nach Anspruch 1, **dadurch gekennzeichnet, dass** die Schaltungsanordnung (3, 7) eine Einrichtung zur Auswertung des Frequenzganges des Schwingkreises aufweist.

7. Einrichtung nach Anspruch 1, **dadurch gekennzeichnet, dass** die Schaltungsanordnung eine Einrichtung (21, 22) zur Auswertung der Verschiebung der Resonanzfrequenz des Schwingkreises aufweist.

8. Einrichtung nach Anspruch 1, **dadurch gekennzeichnet, dass** die Schaltungsanordnung eine Einrichtung (23) zur Auswertung der Änderung der Spannungs-Amplitude des Schwingkreises auf-

**9.** Einrichtung nach Anspruch 1, **dadurch gekennzeichnet, dass** eine Einrichtung zur Gewichtung für die Werkzeug-Leiter-Berührungen bei der Kabelbearbeitung je nach Berührungsdauer und Zeitpunkt innerhalb des Kabelbearbeitungsprozesses vorgesehen ist, durch welche Einrichtung quantitative Produktionsausschusskriterien bestimmbar sind.

**10.** Einrichtung nach Anspruch 1, **dadurch gekennzeichnet, dass** das Werkzeug (2a, 2b) nur an wenigen, eng begrenzten Stellen am Werkzeughalter (1a, 1b) anliegt und zwischen diesen Stellen Freistellungen (30, 31 und 32) vorgesehen sind.

**11.** Einrichtung nach Anspruch 1, **dadurch gekennzeichnet, dass** die elektrische Isolierung zwischen Werkzeug (2a, 2b) und Werkzeughalter (1a, 1b) durch eine elektrisch isolierende Beschichtung von Werkzeug und/oder Werkzeughalter gebildet ist, vorzugsweise durch eine keramische Beschichtung.

**12.** Einrichtung nach Anspruch 1, **dadurch gekennzeichnet, dass** zwischen Werkzeug (2a, 2b) und Werkzeughalter (1a, 1b) zumindest eine isolierende Zwischenscheibe (40) angeordnet ist, vorzugsweise zumindest eine auf dem Werkzeug oder dem Werkzeughalter befestigte, vorzugsweise aufgeklebte, Keramikplatte.

**13.** Einrichtung nach Anspruch 1, **dadurch gekennzeichnet, dass** ein Encoder für die Abstandsmessung zwischen den Werkzeugen (2a, 2b) vorgesehen ist und die Schaltungsanordnung zur Berechnung des Durchmessers des Leiters (5b) aus dem Abstand der Werkzeuge (2a, 2b) bei festgestellter Änderung des Schwingungsparameters des Schwingkreises ausgelegt ist.

**14.** Einrichtung nach einem der Ansprüche 1 bis 13, **dadurch gekennzeichnet, dass** das Werkzeug ein Abisoliermesser (2a, 2b) an einer Abisoliermaschine für Kabel (5) ist.

**15.** Abisoliermaschine mit zumindest einem Abisoliermesser (2a, 2b), das an einem Werkzeughalter (1a, 1b) gehalten ist, und mit einer Einrichtung zur Erkennung der Berührung eines elektrischen Leiters (5b) eines Kabels (5) durch zumindest eines der Abisoliermesser, **dadurch gekennzeichnet, dass** das Abisoliermesser das Werkzeug am Werkzeughalter einer Einrichtung gemäss einem der Ansprüche 1 bis 14 ist.

## Claims

**1.** Device for detecting contact with an electrical conductor (5b) optionally mostly surrounded by electrical insulation (5a) by a tool (2a; 2b) which consists of electrically conductive material and is attached to a tool holder (1a; 1b) made of electrically conductive material, wherein a thin electrical insulator is provided between tool and tool holder, **characterized in that** an inductance (La, Lb) is connected between tool (2a; 2b) and tool holder (1a; 1b), and in such manner the tool (2a, 2b) and the tool holder (1a, 1b) are parts of a high quality parallel resonant circuit, and that a circuit arrangement (3, 7) is connected therewith to detect the change in characteristic oscillation parameters of said oscillating circuit, wherein a capacitance of the parallel resonant circuit is formed in part by a capacitor (C4) of the connection between the tool and the circuit arrangement, wherein at least one coil (L) is provided as inductance (La, Lb).

**2.** Device according to Claim 1, **characterized in that** the capacitance (CS) of the parallel resonant circuit is formed functionally by the capacitor (C2) of the tool assembly (2a, 2b), insulation and tool holder (1a, 1b).

**3.** Device according to Claim 1, **characterized in that** the capacitance (CS) of the parallel resonant circuit is formed by the capacitor (C4) of the connection between tool (2a, 2b) and circuit arrangement (3, 7), in particular by the capacitance of a coaxial cable (4).

**4.** Device according to Claim 1, **characterized in that** the capacitance (CS) forming the resonant circuit is increased at least in part by an output capacitor (CA) .

**5.** Device according to Claim 1, **characterized in that** the circuit arrangement includes a frequency generator (3) for an excitation voltage for the resonant circuit and a phase detector (7; 11-16) for evaluating the phase shift φ between the excitation voltage and the resonant circuit voltage.

**6.** Device according to Claim 1, **characterized in that** the circuit arrangement (3, 7) includes a means for evaluating the frequency response of the resonant circuit.

**7.** Device according to Claim 1, **characterized in that** the circuit arrangement includes a means (21, 22) for evaluating the shift of the resonance frequency of the resonant circuit.

**8.** Device according to Claim 1, **characterized in that** the circuit arrangement includes a means (23) for evaluating the change in the voltage amplitude of the oscillation circuit.

9. Device according to Claim 1, **characterized in that** a device is provided for weighting for the tool-conductor contacts depending on the contact duration and point in time within the cable handling process while the cable is being handled, by means of which device quantitative production reject criteria can be determined.

10. Device according to Claim 1, **characterized in that** the tool (2a, 2b) only bears on the tool holder (1a, 1b) at a small number of strictly delimited sites, and contactless positions (30, 31 and 32) are provided between these sites.

11. Device according to Claim 1, **characterized in that** the electrical insulation between tool (2a, 2b) and tool holder (1a, 1b) is formed by an electrically insulating coating of the tool and/or tool holder, preferably by a ceramic coating.

12. Device according to Claim 1, **characterized in that** at least one insulating intermediate plate (40) is arranged between tool (2a, 2b) and tool holder (1a, 1b), preferably at least one ceramic plate fastened, preferably attached by adhesion to the tool or the tool holder.

13. Device according to Claim 1, **characterized in that** an encoder is provided for measuring the distance between tools (2a, 2b), and the circuit arrangement is designed for calculating the diameter of the conductor (5b) from the distance between the tools (2a, 2b) when a change in the oscillation parameter of the resonant circuit is detected.

14. Device according to any one of Claims 1 to 13, **characterized in that** the tool is a stripping blade (2a, 2b) on a stripping machine for cables (5).

15. Stripping machine with at least one stripping blade (2a, 2b) which is retained on a tool holder (1a, 1b), and with a device for detecting contact between an electrical conductor (5b) of a cable (5) by means of at least one of stripping blades, **characterized in that** the stripping blade is the tool on the tool holder of a device according to any one of Claims 1 to 14.

## Revendications

1. Système pour identifier le contact d'un conducteur (5b) électrique enveloppé par une isolation la plupart du temps électrique (5a) par un outil (2a, 2b), qui est dans un matériau électroconducteur et est fixé à un porte-outil (1a, 1b) en matériau électrocoducteur, une isolation électrique mince étant prévue entre l'outil et le porte-outil, **caractérisé en ce qu'**une inductance (La, Lb) est électriquement connectée entre l'outil (2a, 2b) et le porte-outil (1a, 1b) et l'outil (2a, 2b) et le porte-outil (1a, 1b) font partie d'un circuit oscillant parallèle de haute qualité de telle sorte qu'un agencement de circuits (3,7) est relié à celui-ci pour déterminer la variation des paramètres d'oscillation caractéristiques de ce circuit oscillant, une capacité du circuit oscillant parallèle étant formée en partie par une capacité (C4) de la liaison de l'outil et de l'agencement de circuits, au moins une bobine (L) étant prévue comme inductance (La, Lb).

2. Système selon la revendication 1, **caractérisé en ce que** la capacité (CS) du circuit oscillant parallèle est formé de façon fonctionnelle par la capacité (C2) de l'agencement : outil (2a, 2b), isolation et porte-outil (1a, 1b).

3. Système selon la revendication 1, **caractérisé en ce que** la capacité (CS) du circuit oscillant parallèle (C4) est formée par la capacité (C4) de la liaison de l'outil (2a, 2b) et de l'agencement de circuit (3, 7), notamment par la capacité d'un câble coaxial (4).

4. Système selon la revendication 1, **caractérisé en ce que** la capacité (CS) formant le circuit oscillant est amplifiée au moins en partie par un condensateur de sortie (CA).

5. Système selon la revendication 1, **caractérisé en ce que** l'agencement de circuit comporte un générateur de fréquence (3) pour une tension d'excitation de champ pour le circuit oscillant et un détecteur de phase (7,11 - 16) pour exploiter le déphasage φ entre la tension d'excitation de champ et la tension de circuit oscillant.

6. Système selon la revendication 1, **caractérisé en ce que** l'agencement de circuit (3, 7) comporte un système pour l'exploitation de la réponse fréquentielle du circuit oscillant.

7. Système selon la revendication 1, **caractérisé en ce que** l'agencement de circuit comporte un système (21, 22) pour l'exploitation du décalage de la fréquence de résonance du circuit oscillant.

8. Système selon la revendication 1, **caractérisé en ce que** l'agencement de circuits comporte un système (23) pour l'exploitation de la variation de l'amplitude de tension du circuit oscillant.

9. Système selon la revendication 1, **caractérisé en ce qu'**un système pour la pondération pour les contacts outil-conducteur lors de l'élaboration de câble est prévu respectivement selon la durée de contact et le moment à l'intérieur du processus d'élaboration de câble, système par lequel des critères de rejet de production quantitatifs peuvent être déterminés.

**10.** Système selon la revendication 1, **caractérisé en ce que** l'outil (2a, 2b) n'adhère qu'à peu d'endroits extrêmement limités au porte-outil (1a, 1b) et des emplacements libres (30, 31 et 32) sont prévus entre ces emplacements.

**11.** Système selon la revendication 1, **caractérisé en ce que** l'isolation électrique entre l'outil (2a, 2b) et le porte-outil (1a, 1b) est formée par un revêtement électro-isolant de l'outil et/ou du porte-outil, de préférence par un revêtement céramique.

**12.** Système selon la revendication 1, **caractérisé en ce qu'**au moins une plaque intermédiaire (40) est disposée entre l'outil (2a, 2b) et le porte-outil (1a, 1b), de préférence au moins une plaque de céramique fixée sur l'outil ou le porte-outil, de préférence collée.

**13.** Système selon la revendication 1, **caractérisé en ce qu'**un codeur pour la mesure de la distance entre les outils (2a, 2b) est prévu et l'agencement de circuit pour le calcul du diamètre du conducteur (5b) est conçu à partir de la distance des outils (2a, 2b) lors d'une variation constatée du paramètre d'oscillation du circuit oscillant.

**14.** Système selon l'une quelconque des revendications 1 à 13, **caractérisé en ce que** l'outil est un couteau à dénuder (2a, 2b) sur une machine à dénuder pour câble (5) .

**15.** Machine à dénuder avec au moins un couteau à dénuder (2a, 2b), qui est maintenu sur un porte-outil (1a, 1b) et avec un système pour identifier le contact d'un conducteur électrique (5b) d'un câble (5) par au moins un des couteau à dénuder, **caractérisée en ce que** le couteau à dénuder est l'outil sur le porte-outil d'un système selon l'une quelconque des revendications 1 à 14.

**FIG 1**

**FIG 2**

# FIG 3

# FIG 4

$$Z_L = Rk + sL$$

$$Z_C = Rd + \frac{1}{sC}$$

$$Z_C = \frac{1 + sRdC}{sC}$$

$$H(s) = \frac{Rk + s(L + RkRdC) + s^2 RdLC}{(Rv+Rk) + s(L+RvC(Rk+Rd) + RkRdC) + s^2 LC(Rv+Rd)}$$

# FIG 5

Dicke Linie ohne Leiterkontakt mit:

C = 50 pF, Rd = 10 Ω

L = 15 uH, Rk = 1 Ω

Rv = 4700 Ω

Dünne, gestrichelte Linie mit Leiter-Kontakt

C = 55 pF

Frequenz (Hz)

# FIG 6

**FIG 7**

**FIG 8**

1
31
30
2

1

32

**FIG 9**

A

A

1
31
30
2

A – A

32
34
32

33

**FIG 10**

**FIG 11**

**FIG 12**

2a

52a

51

50

53

58

59

60

57

61

52

56

4

55

57  54

**FIG 13**

A

1

4

70

A - A

1

2

X

50

X
(4:1)

4

57

55

2

71    71

70  (3:1)

70b

70c

70a

70d

**FIG 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009027967 A1
- JP 2133016 A
- EP 1772701 B1
- DE 102007053825
- WO 2012015062 A1
- JP 7227022 A
- JP 2000354315 A
- DE 202011107872 U1
- JP H11299036 A